# EUROPEAN PATENT SPECIFICATION

(11) **EP 3 116 979 B1**
(45) Date of publication and mention of the grant of the patent: **14.11.2018**
(21) Application number: 15707522.7
(22) Date of filing: 23.02.2015
(51) Int. Cl.: C10M 143/00, C10M 175/00

(54) **METHOD OF LUBRICATING AN INTERNAL COMBUSTION ENGINE**
METHODE ZUM SCHMIEREN EINES VERBRENNUNGSMOTORS
MÉTHODE DE LUBRIFICATION D'UN MOTEUR DE COMBUSTION

(30) Priority: 12.03.2014 US 201461951634 P
(43) Date of publication of application: 18.01.2017
(73) Proprietor: The Lubrizol Corporation, Wickliffe, OH 44092-2298 (US)
(72) Inventor: GALIC RAGUZ, Mary, Wickliffe, OH 44092-2298 (US); LOOP, John G., Wickliffe, OH 44092-2298 (US); TRUONG, My Hang T., Wickliffe, OH 44092-2298 (US); O'RYAN, William, Belper Derbyshire DE56 1QN (GB)
(74) Representative: D Young & Co LLP
(86) International application number: PCT/US2015/017030
(87) International publication number: WO 2015/138109

(56) References cited:
- EP-A1- 2 239 314
- US-A1- 2003 024 512
- DIPL-ING KAY BRODESSER ET AL: "Hocheffizientes Ölabscheidesystem für die Kurbelgehäuseentlüftung", MTZ - MOTORTECHNISCHE ZEITSCHRIFT, 1 March 2003 (2003-03-01), pages 180-184, XP055182255, DOI: 10.1007/BF03226688

## Description

### FIELD OF INVENTION

The invention provides a method of lubricating an internal combustion engine equipped with a centrifugal oil mist separator, wherein the lubricant contains 0.1 wt % to 8 wt % soot resulting from operation of the engine, and wherein the lubricant composition comprises an oil of lubricating viscosity, and 0.2 wt % to 3 wt % of a soot dispersing additive, wherein the soot dispersing additive comprises a block copolymer comprising (i) a vinyl aromatic monomer block and (ii), a conjugated diene olefin monomer block, and wherein the soot dispersing additive has a shear stability index of 0 to 25.

### BACKGROUND OF THE INVENTION

Equipment manufacturers in recent years having been designing internal combustion engines in ways to assist in the reduction of various greenhouses gases or particulate matter and/or they have been using after treatment devices such as diesel particulate filters, or SCR (selective catalytic reduction). A recent development in engine design has been to incorporate a centrifugal oil mist separator into engines, typically diesel engines (typically having an open or closed crankcase). Centrifugal oil mist separators often become plugged with a deposit (consistency varies from slimy/sludgy to hard-tacky) which, if enough deposits are collected, reduces the efficiency and/or completely disables the device and allows oil to drip out of the engine. This problem is believed to be particularly apparent in heavy duty diesel engines.

US2003/0024512 discloses a centrifugal mist separator and a lubricated engine equipped with such a centrifugal mist separator.

### SUMMARY OF THE INVENTION

The present invention allows for an internal combustion engine (typically a compression ignition engine) to have at least one of reduced oil mist separator filter plugging, and reduced deposits such as slimy/sludgy to hard-tacky deposits.

As used herein reference to the amounts of additives present in the lubricating composition disclosed herein are quoted on an oil free basis, i.e., amount of actives, unless otherwise indicated.

As used herein, the transitional term "comprising," which is synonymous with "including," "containing," or "characterized by," is inclusive or open-ended and does not exclude additional, un-recited elements or method steps. However, in each recitation of "comprising" herein, it is intended that the term also encompass, as alternative embodiments, the phrases "consisting essentially of' and "consisting of," where "consisting of' excludes any element or step not specified and "consisting essentially of' permits the inclusion of additional un-recited elements or steps that do not materially affect the basic and novel characteristics of the composition or method under consideration.

As used herein the expression "compression ignition internal combustion engine" is intended to encompass internal combustion engines that have at least in part compression ignition. As a result the invention is intended to encompass a method of lubricating a compression ignition internal combustion engine, as well as spark assisted compression ignition internal combustion engines.

The invention relates to a method of lubricating an internal combustion engine equipped with a centrifugal oil mist separator, wherein the lubricant contains 0.1 wt % to 8 wt %, or 0.3 wt % to 6 wt % (or typically 0.5 wt % to 4 wt %) soot resulting from operation of the engine, and wherein the lubricant composition comprises an oil of lubricating viscosity, and 0.2 wt % to 3 wt % of a soot dispersing additive having a shear stability index of 0 to 25, wherein the soot dispersing additive is a block copolymer comprising (i) a vinyl aromatic monomer block and (ii), a conjugated diene olefin monomer block.

In one embodiment the lubricant contains less than 0.1 wt % (typically free of) of olefin copolymer soot dispersing additives having a number average molecular weight above 20,000.

In one embodiment the lubricant contains less than 0.1 wt % (typically free of) of olefin copolymer soot dispersing additives.

The internal combustion may have an open or closed crankcase, typically an open crankcase. Both open and closed crankcase ventilation are known in the art. For example open crankcase ventilation prevents build-up of pressure in the crankcase by externally venting blowby emission combustion products that include hydrocarbons, carbon monoxide, NOx and particulate matter. In closed crankcase ventilation (CCV) systems, crankcase gases are typically filtered to remove oil mist and other particulates and then routed back into the intake system.

Typically the internal combustion engine of the present invention may have a closed crankcase ventilation.

The heavy duty vehicle (HDV) containing the internal combustion engine of the present invention may have a laden mass (sometimes referred to as gross vehicle weight rating (GVWR)) of over 2700 kg (or 6000 USA pounds), or over 2900 kg, or over 3000 kg, or over 3300 kg, or over 3500 kg, or over 3700 kg, or over 3900 kg (or 8500 USA pounds). Typically the upper limit on the laden mass or GVWR is set by national government and may be 10000 kg, or 9000 kg, or 8000 kg, or 7500 kg. The upper ranges of laden mass may be up to 400,000 kg, or up to 200,000 kg, or up to 60,000 kg, or up to 44,000 kg, or up to 40,000 kg. Typically a laden mass above 120,000 is for an off-highway vehicle.

The vehicle containing the internal combustion engine of the present invention having a laden mass of over 2700 kg (or 3,500 kg) may be a heavy duty diesel engines equipped with compression ignition engines or positive ignition natural gas (NG) or LPG engines. In contrast, the European Union indicates that for new light duty vehicles (passenger cars and light commercial vehicles) included within the scope of ACEA testing section "C" have a "technically permissible maximum laden mass" not exceeding 2610 kg.

Typically the internal combustion engine may be a diesel engine suitable for powering a vehicle having a laden mass over 2,700 kg.

The centrifugal oil mist separator typically rotates at 2500 to 10000, or 4000 to 8000, or 5000 to 7000 rpm.

In one embodiment the internal combustion engine is a heavy duty diesel compression ignition (or spark assisted compression ignition) internal combustion engine.

There is a distinct difference between passenger car and heavy duty diesel engines. They differ in size from not more than 2610 kg to over 3500 kg GVWR respectively, which means that engines of both types will experience significantly different operating conditions such as load, oil temperatures, duty cycles and engine speeds. Heavy duty diesel engines are designed to maximize torque for hauling payloads at maximum fuel economy while passenger car diesels are designed for commuting people and acceleration at maximum fuel economy. The designed purpose of the engine hauling versus commuting results in different hardware designs and resulting stresses imparted to lubricants designed to protect and lubricate the engine. Another distinct design difference is the operating revolution per minute (RPM) that each engine operates at to haul versus commute. A heavy duty diesel engine such as a typical 12-13 litre truck engine would typically not exceed 2200 rpm while a passenger car engine can go up to 4500 rpm.

It is also disclosed a method of operating a centrifugal oil mist separator wherein the centrifugal oil mist separator is provided with a lubricant for separation comprising 0.1 wt % to 8 wt %, or 0.3 wt % to 6 wt % (or typically 0.5 wt % to 4 wt %) of soot, and a lubricating composition disclosed herein.

### DETAILED DESCRIPTION OF THE INVENTION

The present invention provides a method for lubricating an internal combustion engine as disclosed above.

### Oils of Lubricating Viscosity

The lubricating composition comprises an oil of lubricating viscosity. Such oils include natural and synthetic oils, oil derived from hydrocracking, hydrogenation, and hydrofinishing, unrefined, refined, re-refined oils or mixtures thereof. A more detailed description of unrefined, refined and re-refined oils is provided in International Publication WO2008/147704, paragraphs [0054] to [0056] (a similar disclosure is provided in US Patent Application 2010/197536, see [0072] to [0073]). A more detailed description of natural and synthetic lubricating oils is described in paragraphs [0058] to [0059] respectively of WO2008/147704 (a similar disclosure is provided in US Patent Application 2010/197536, see [0075] to [0076]). Synthetic oils may also be produced by Fischer-Tropsch reactions and typically may be hydroisomerised Fischer-Tropsch hydrocarbons or waxes. In one embodiment oils may be prepared by a Fischer-Tropsch gas-to-liquid synthetic procedure as well as other gas-to-liquid oils.

Oils of lubricating viscosity may also be defined as specified in April 2008 version of "Appendix E - API Base Oil Interchangeability Guidelines for Passenger Car Motor Oils and Diesel Engine Oils", section 1.3 Sub-heading 1.3. "Base Stock Categories". The API Guidelines are also summarised in US Patent US 7,285,516 (see column 11, line 64 to column 12, line 10).

In one embodiment the oil of lubricating viscosity may be an API Group I to III mineral oil, a Group IV synthetic oil, or a Group V napthethnic or ester synthetic oil, or mixtures thereof. In one embodiment the oil of lubricating viscosity may be an API Group II, Group III mineral oil, or a Group IV synthetic oil, or mixtures thereof.

The amount of the oil of lubricating viscosity present is typically the balance remaining after subtracting from 100 wt % the sum of the amount of the additives of the invention and the other performance additives.

The lubricating composition may be in the form of a concentrate and/or a fully formulated lubricant. If the lubricating composition of the invention (comprising the additives disclosed herein) is in the form of a concentrate which may be combined with additional oil to form, in whole or in part, a finished lubricant), the ratio of the of these additives to the oil of lubricating viscosity and/or to diluent oil include the ranges of 1:99 to 99:1 by weight, or 80:20 to 10:90 by weight. Typically the lubricating composition of the invention comprises at least 50 wt %, or at least 60 wt %, or at least 70 wt %, or at least 80 wt % of an oil of lubricating viscosity.

### Soot Dispersing Additive

The soot dispersing additive is a block copolymer comprising (i) a vinyl aromatic monomer block and (ii), a conjugated diene olefin monomer block. The block copolymer is typically hydrogenated to saturate greater than 90%, or greater than 98%, of the olefinic double bonds. The soot dispersing performance of the aromatic compound is without being bound by theory thought to be due to the presence of the aromatic groups within the aromatic compound, typically styrenic groups.

The soot dispersing additive has a shear stability index of 0 to 25, or 0 to 20, or 2 to 20, or 5 to 15 as measured by dissolving an appropriate amount of the additive in a 6.0 to 6.1 mm/s² or cSt (measured at 100°C according to ASTM D445) Group I or Group II mineral oil to prepare a 9 - 13 mm²/s or cSt solution and testing the solution in the Orbahn shear test (ASTM D6278).

The soot dispersing additive may be present at 0.2 wt % to 3 wt %, or 0.2 wt % to 2.5 wt %, or 0.3 wt % to 1.4 wt % of the lubricating composition.

The soot dispersing additive may have a shear stability index of 0 to 20 and be present at 0.2 wt % to 2.5 wt %, or 0.3 wt % to 1.4 wt %.

The soot dispersing additive may have a shear stability index of 5 to 15 and be present at 0.2 wt % to 2.5 wt %, or 0.3 wt % to 1.4 wt %.

The soot dispersing additive may have a number average molecular weight of 5000 to 300,000, or 10,000 to 200,000, or 50,000 to 200,000.

The block copolymer vinyl aromatic monomer repeat unit may comprise 5 to 50 mol %, or from 10 mol % to 40 mol %, or 20 mol % to 35 mol % of the block copolymer.

The block copolymer olefin repeat unit may comprise 50 to 95 mol %, or from 60 mol % to 90 mol %, or from 65 mol % to 80 mol % of the block copolymer.

The block copolymer in different embodiments may be a hydrogenated styrene-butadiene copolymer or a hydrogenated styrene-isoprene copolymer. Both block copolymers are known in the art and are disclosed for example in EP 2 001 983 A (Price et al.) for hydrogenated styrene-butadiene and US 5,490,945 (Smith et al.) for hydrogenated styrene-isoprene.

Often the block copolymer comprises styrene-butadiene copolymer. The styrene-butadiene copolymer is typically hydrogenated.

The butadiene block of the hydrogenated styrene-butadiene copolymer may be prepared with by either 1,2- addition or 1,4- addition, with 1,2- addition preferred as is disclosed in EP 2 001 983 A. Using 1,2- addition results in a butadiene block having 20 mol % to 80 mol %, or 25 mol % to 75 mol %, or 30 mol % to 70 mol %, or 40 mol % to 65 mol % of repeat units of branched alkyl groups due to initially-formed pendant unsaturated or vinyl groups, upon hydrogenation, become alkyl branches.

WO2007/121039 discloses a block copolymer comprising (i) a vinyl aromatic repeat unit and (ii), an olefin repeat unit within the scope of the present invention.

The soot dispersing additive may also be a copolymer disclosed in EP 449 374. The soot dispersing additive may be prepared by a process comprising:
1) reacting an alpha-beta unsaturated carboxylic acid or active derivative thereof with a selectively hydrogenated star-shaped polymer comprising a polyvinylaromatic nucleus and at least 4 polymeric arms linked to said nucleus wherein said polymeric arms are chosen from:
   (i) hydrogenated homopolymers and hydrogenated copolymers of conjugated dienes;
   (ii) hydrogenated copolymers of conjugated dienes and monoalkenyl arenes (typically a vinyl aromatic monomer such as styrene); and
   (iii) mixtures thereof;
   and wherein at least 80% of the aliphatic unsaturation of the star-shaped polymer has been reduced by hydrogenation while less than 20% of the aromatic unsaturation has been reduced; and
2) reacting the activated star polymer thus formed with:
   (a) at least one compound of general formula RO(AO)ₙH, wherein R may be a C₄₋₂₀ alkyl group, any A moiety may be independently an ethylene or propylene moiety, and n may be 0 to 5, optionally followed by reaction with (b) a long chain alkane-substituted carboxylic acid or active derivative thereof, and/or (c) a C₁ to C₈ amine containing 1 to 8 nitrogen atoms and/or an alkane polyol having at least two hydroxy groups; or with (d) the pre-formed product of reactants (b) and (c), optionally followed by esterifying any residual acid groups with a C₁₋₆ alkanol.

Copolymers such as those disclosed in EP 449 374 may be styrene-isoprene copolymers.

The isoprene block of the hydrogenated styrene-butadiene copolymer may be prepared with by either 1,2- addition or 1,4- addition, or 3,4-addition.

Typically the styrene-isoprene copolymers or block copolymer comprising (i) a vinyl aromatic repeat unit and (ii), an olefin repeat unit may have a shear stability index of 0 to 20, or 10 to 15 as measured by the Orbahn shear test (ASTM D6278).

It is also disclosed a method of lubricating an internal combustion engine equipped with a centrifugal oil mist separator where the soot dispersing additive comprises:
a block copolymer comprising (i) a vinyl aromatic monomer block and (ii), a conjugated diene olefin monomer block, and wherein the soot dispersing additive has a shear stability index of 0 to 25, and 0.05 to 1.5 percent by weight of a copolymer comprising 45 to 85 % by weight of units derived from ethylene, having a M̅_{w} of 50,000 to 300,000, M̅_{w}/M̅ₙ less than 3, and a melting point of 0°C to 60°C.

The copolymer comprising 45 to 85 % by weight of units derived from ethylene may have units derived from ethylene, having a M̅_{w} of 50,000 to 130,000, M̅_{w}/M̅ₙ less than 3, and a melting point of 0°C to 60°C, 130,000, and typically (f) shear stability index (SSI) less than or equal to 50 or, ≤ 18, as determined employing ASTM Procedures D-6278 and D-6022. It will typically also have (b) density (D) of 835 or 845 to 895 kg/m³, or 857 to 882 kg/m³; (c) M̅_{w}/M̅ₙ less than 3; (d) melting point (Tₘ) measured by differential scanning calorimeter of 0°C or 15°C to 60°C. In one embodiment (e) the degree of crystallinity is ≥ 15%. In one embodiment the density and the melting point fulfill the expression Tₘ ≤ 1.247 D-1037 and in another embodiment the percentage content (E: % by weight) of repeating units derived from ethylene and melting point (Tₘ: °C) of the copolymer A) fulfill the expression 3.44E - 206 ≥ Tₘ. A more detailed description of the copolymer is described in WO2004/087849.

### Soot Dispersing Dispersant

In one embodiment the lubricant may further comprise a soot dispersing dispersant. The soot dispersing dispersant may comprise an aromatic amine moiety obtained/obtainable by reacting a carboxylic functionalized polymer known in the art (typically a polyisobutylene succinic anhydride) with an amine having at least 4 aromatic groups (typically an aldehyde (such as formaldehyde coupled 4-aminodiphenylamine). The soot dispersing additive of this type is described for example in US 8,557,753. The soot dispersing additive of this type may have a shear stability index of 0 to 10, or 0 to 5 as measured by the Orbahn shear test (ASTM D6278).

The resultant product of reacting the carboxylic functionalized polymer (typically a polyisobutylene succinic anhydride) with an amine having at least 4 aromatic groups may be represented by the formulae: 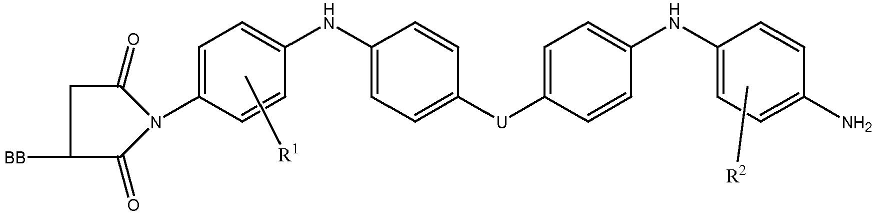 or 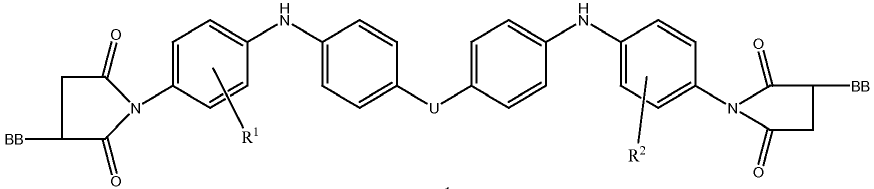 wherein independently each variable,R¹ may be hydrogen or a C₁₋₅ alkyl group (typically hydrogen); R² may be hydrogen or a C₁₋₅ alkyl group (typically hydrogen); U may be an aliphatic, alicyclic or aromatic group, with the proviso that when U is aliphatic, the aliphatic group may be linear or branched alkylene group containing 1 to 5, or 1 to 2 carbon atoms; BB is a polymer backbone and may be polyisobutylene, or copolymers of polyolefins (in particular ethylene-alphaolefins such as ethylenepropylene copolymers). BB may be substituted with one succinimide group as is shown in formulae above, or it may be substituted by multiple succinimide groups.

In addition to formulae above, additional structures may also be formed including trimers, tetramers, higher-mers or mixtures thereof.

When BB is polyisobutylene the resultant carboxylic functionalized polymer may typically be polyisobutylene succinic anhydride.

When BB is other than polyisobutylene, and has maleic anhydride (or other carboxylic acid functionality) grafted thereon, one or more of the grafted maleic anhydride groups is a succinimide of the amine of the invention. The number of succinimide groups may be 1 to 40, or 2 to 40, or 3 to 20.

When the soot dispersing dispersant is derived from a polyisobutylene its number average molecular weight (by gel permeation chromatography, polystyrene standard), may be 350 to 5000, or 550 to 3000 or 750 to 2500. (Thus, a polyisobutylene succinic anhydride may have, that is, be derived from, a polyisobutylene with any of the foregoing molecular weights.) Commercially available polyisobutylene polymers have a number average molecular weight of 550, 750, 950-1000, 1550, 2000, or 2250. Some of the commercially available polyisobutylene polymers may obtain the number average molecular weights shown above by blending one or more polyisobutylene polymers of different weights.

The polyisobutylene succinic anhydride may be formed by reactions known in the art such as by an "ene" reaction, or a "Diels-Alder" reaction (typically obtained/obtainable by Diels Alder reaction).

When both the dispersant viscosity modifier comprising the block copolymer, and the soot dispersing dispersant are present the treat rate of each may be 0.1 wt % to 4 wt %, or 0.2 wt %to 2.5 wt %, or 0.4 wt % to 1.8 wt % of the lubricating composition.

### Overbased Sulfonate Detergent

In one embodiment the lubricating composition comprises an overbased sulpohnate detergent. The overbased sulfonate detergent may be present at 0.01 wt % to 0.9 wt %, or 0.05 wt % to 0.8 wt %, or 0.1 wt % to 0.7 wt %, or 0.2 wt % to 0.6 wt %.

The sulfonate may be prepared from a mono- or di- hydrocarbyl-substituted benzene (or naphthalene, indenyl, indanyl, or bicyclopentadienyl) sulfonic acid, wherein the hydrocarbyl group may contain 6 to 40, or 8 to 35 or 9 to 30 carbon atoms.

The hydrocarbyl group may be derived from polypropylene or a linear or branched alkyl group containing at least 10 carbon atoms. Examples of a suitable alkyl group include branched and/or linear decyl, undecyl, dodecyl, tridecyl, tetradecyl, pentadecyl, hexadecyl, heptadecyl, octadecyl, octadecenyl, nonodecyl, eicosyl, un-eicosyl, do-eicosyl, tri-eicosyl, tetra-eicosyl, penta-eicosyl, hexa-eicosyl or mixtures thereof.

In one embodiment the hydrocarbyl-substituted sulfonic acid may include polypropene benzenesulfonic acid and C₁₆-C₂₄ alkyl benzenesulfonic acid, or mixtures thereof.

Overbased sulfonates typically have a total base number of 250 to 600, or 300 to 500. Overbased detergents are known in the art. In one embodiment the sulfonate detergent may be a predominantly linear alkylbenzene sulfonate detergent having a metal ratio of at least 8 as is described in paragraphs [0026] to [0037] of US Patent Application 2005065045 (and granted as US 7,407,919). The predominantly linear alkylbenzene sulfonate detergent may be particularly useful for assisting in improving fuel economy.

Overbased detergents are known in the art. Overbased materials, otherwise referred to as overbased or superbased salts, are generally single phase, homogeneous Newtonian systems characterized by a metal content in of that which would be present for neutralization according to the stoichiometry of the metal and the particular acidic organic compound reacted with the metal. The overbased materials are prepared by reacting an acidic material (typically an inorganic acid or lower carboxylic acid, preferably carbon dioxide) with a mixture comprising an acidic organic compound, a reaction medium comprising at least one inert, organic solvent (mineral oil, naphtha, toluene, xylene, etc.) for said acidic organic material, a stoichiometric excess of a metal base, and a promoter such as a calcium chloride, acetic acid, phenol or alcohol. The acidic organic material will normally have a sufficient number of carbon atoms to provide a degree of solubility in oil. The amount of "excess" metal (stoichiometrically) is commonly expressed in terms of metal ratio. The term "metal ratio" is the ratio of the total equivalents of the metal to the equivalents of the acidic organic compound. A neutral metal salt has a metal ratio of one. A salt having 3.5 times as much metal as present in a normal salt will have metal excess of 3.5 equivalents, or a ratio of 4.5. The term "metal ratio is also explained in standard textbook entitled "Chemistry and Technology of Lubricants", Third Edition, Edited by R. M. Mortier and S. T. Orszulik, Copyright 2010, page 219, sub-heading 7.25. Typically the overbased sulfonate of the present invention may have a metal ratio of 3.5:1 to 40:1, or 5:1 to 30:1, or 12:1 to 25:1. Typically the overbased sulpohnate of the present invention has a TBN of 300 to 500 and a metal ratio of 12:1 to 25:1. In different embodiment the overbased sulfonate detergent has a metal ratio of 12 to less than 20, or 12 to 18, or 20 to 30, or 22 to 25.

In one embodiment the overbased sulfonate detergent comprises an overbased calcium sulfonate, a sodium sulfonate, a magnesium sulfonate, or mixtures thereof. Typically the overbased sulfonate is/comprises a calcium sulfonate.

In one embodiment the overbased sulfonate detergent comprises a calcium sulfonate detergent having a metal ratio of 18 to 40 has a TBN of 300 to 500, or 325 to 425.

### Other Performance Additives

A lubricating composition may be prepared by adding the product of the process described herein to an oil of lubricating viscosity, optionally in the presence of other performance additives (as described herein below).

The lubricating composition of the invention optionally comprises other performance additives. The other performance additives include at least one of metal deactivators, viscosity modifiers (other than the soot dispersing additive of the present invention), detergents, friction modifiers, antiwear agents, corrosion inhibitors, dispersants (other than those of the present invention), extreme pressure agents, antioxidants, foam inhibitors, demulsifiers, pour point depressants, seal swelling agents and mixtures thereof. Typically, fully-formulated lubricating oil will contain one or more of these performance additives.

In one embodiment the invention provides a lubricating composition further comprising an overbased metal-containing detergent in addition to the overbased sulfonate detergent defined as an essential feature of the present invention. The metal of the metal-containing detergent may be zinc, sodium, calcium, barium, or magnesium. Typically the metal of the metal-containing detergent may be sodium, calcium, or magnesium.

The overbased metal-containing detergent may be chosen from non-sulfur containing phenates, sulfur containing phenates, salixarates, salicylates, and mixtures thereof, or borated equivalents thereof. The overbased detergent may be borated with a borating agent such as boric acid.

The overbased metal-containing detergent may also include "hybrid" detergents formed with mixed surfactant systems including phenate and/or sulfonate components, e.g. phenate/salicylates, sulfonate/phenates, sulfonate/salicylates, sulfonates/phenates/salicylates, as described; for example, in US Patents 6,429,178; 6,429,179; 6,153,565; and 6,281,179. Where, for example, a "hybrid sulfonate/phenate detergent is employed, the "hybrid detergent would be considered equivalent to amounts of distinct phenate and sulfonate detergents introducing like amounts of phenate and sulfonate soaps, respectively.

Typically, an overbased metal-containing detergent may be a zinc, sodium, calcium or magnesium salt of a phenate, sulfur containing phenate, salixarate or salicylate. Overbased salixarates, phenates and salicylates typically have a total base number of 180 to 450 TBN.

Typically, the overbased metal-containing detergent may be a calcium or magnesium an overbased detergent.

In another embodiment the lubricating composition further comprises a calcium phenate overbased detergent having a TBN of 200 to 275.

In one embodiment the lubricating composition further comprises 0.01 wt % to 2 wt %, or 0.1 to 1 wt % of a detergent different from the overbased sulfonate detergent, wherein the further detergent is chosen from non-sulfur containing phenates, sulfur containing phenates, sulfonates, salixarates, salicylates, and mixtures thereof, or borated equivalents thereof.

In one embodiment the lubricating composition further comprises a "hybrid" detergent formed with mixed surfactant systems including phenate and/or sulfonate components, e.g. phenate/salicylates, sulfonate/phenates, sulfonate/salicylates, or sulfonates/phenates/salicylates.

The lubricating composition in a further embodiment comprises an antioxidant, wherein the antioxidant comprises a phenolic or an aminic antioxidant or mixtures thereof. The antioxidants include diarylamines, alkylated diarylamines, hindered phenols, or mixtures thereof. When present the antioxidant is present at 0.1 wt % to 3 wt %, or 0.5 wt % to 2.75 wt %, or 1 wt % to 2.5 wt % of the lubricating composition.

The diarylamine or alkylated diarylamine may be a phenyl-α-naphthylamine (PANA), an alkylated diphenylamine, or an alkylated phenylnapthylamine, or mixtures thereof. The alkylated diphenylamine may include di-nonylated diphenylamine, nonyl diphenylamine, octyl diphenylamine, di-octylated diphenylamine, di-decylated diphenylamine, decyl diphenylamine and mixtures thereof. In one embodiment the diphenylamine may include nonyl diphenylamine, dinonyl diphenylamine, octyl diphenylamine, dioctyl diphenylamine, or mixtures thereof. In another embodiment the alkylated diphenylamine may include nonyl diphenylamine, or dinonyl diphenylamine. The alkylated diarylamine may include octyl, di-octyl, nonyl, di-nonyl, decyl or di-decyl phenylnapthylamines.

The hindered phenol antioxidant often contains a secondary butyl and/or a tertiary butyl group as a sterically hindering group. The phenol group may be further substituted with a hydrocarbyl group (typically linear or branched alkyl) and/or a bridging group linking to a second aromatic group. Examples of suitable hindered phenol antioxidants include 2,6-di-tert-butylphenol, 4-methyl-2,6-di-tert-butylphenol, 4-ethyl-2,6-di-tert-butylphenol, 4-propyl-2,6-di-tert-butylphenol or 4-butyl-2,6-di-tert-butylphenol, or 4-dodecyl-2,6-di-tert-butylphenol. In one embodiment the hindered phenol antioxidant may be an ester and may include, e.g., Irganox™ L-135 from Ciba. A more detailed description of suitable ester-containing hindered phenol antioxidant chemistry is found in US Patent 6,559,105.

The lubricating composition may in a further embodiment include a dispersant, or mixtures thereof. The dispersant may be a succinimide dispersant, a Mannich dispersant, a succinamide dispersant, a polyolefin succinic acid ester, amide, or ester-amide, or mixtures thereof. In one embodiment the dispersant may be present as a single dispersant. In one embodiment the dispersant may be present as a mixture of two or three different dispersants, wherein at least one may be a succinimide dispersant.

The succinimide dispersant may be derived from an aliphatic polyamine, or mixtures thereof. The aliphatic polyamine may be aliphatic polyamine such as an ethylenepolyamine, a propylenepolyamine, a butylenepolyamine, or mixtures thereof. In one embodiment the aliphatic polyamine may be ethylenepolyamine. In one embodiment the aliphatic polyamine may be chosen from ethylenediamine, diethylenetriamine, triethylenetetramine, tetraethylenepentamine, pentaethylenehexamine, polyamine still bottoms, and mixtures thereof.

In one embodiment the dispersant may be a polyolefin succinic acid ester, amide, or ester-amide. For instance, a polyolefin succinic acid ester may be a polyisobutylene succinic acid ester of pentaerythritol, or mixtures thereof. A polyolefin succinic acid ester-amide may be a polyisobutylene succinic acid reacted with an alcohol (such as pentaerythritol) and a polyamine as described above.

The dispersant may be an N-substituted long chain alkenyl succinimide. An example of an N-substituted long chain alkenyl succinimide is polyisobutylene succinimide. Typically the polyisobutylene from which polyisobutylene succinic anhydride is derived has a number average molecular weight of 350 to 5000, or 550 to 3000 or 750 to 2500. Succinimide dispersants and their preparation are disclosed, for instance in US Patents 3,172,892, 3,219,666, 3,316,177, 3,340,281, 3,351,552, 3,381,022, 3,433,744, 3,444,170, 3,467,668, 3,501,405, 3,542,680, 3,576,743, 3,632,511, 4,234,435, Re 26,433, and 6,165,235, 7,238,650 and EP Patent Application 0 355 895 A.

The dispersants may also be post-treated by conventional methods by a reaction with any of a variety of agents. Among these are boron compounds (such as boric acid), urea, thiourea, dimercaptothiadiazoles, carbon disulphide, aldehydes, ketones, carboxylic acids such as terephthalic acid, hydrocarbon-substituted succinic anhydrides, maleic anhydride, nitriles, epoxides, and phosphorus compounds. In one embodiment the post-treated dispersant is borated. In one embodiment the post-treated dispersant is reacted with dimercaptothiadiazoles. In one embodiment the post-treated dispersant is reacted with phosphoric or phosphorous acid. In one embodiment the post-treated dispersant is reacted with terephthalic acid and boric acid (as described in US Patent Application US2009/0054278.

When present, the dispersant may be present at 0.01 wt % to 20 wt %, or 0.1 wt % to 15 wt %, or 0.1 wt % to 10 wt %, or 1 wt % to 6 wt %, or 1 to 3 wt % of the lubricating composition.

In one embodiment the lubricating composition disclosed herein further comprises an ashless dispersant comprising a succinimide dispersant different from the soot-dispersing additive of the invention, wherein the succinimide dispersant has a TBN of at least 40 mg KOH/g, and said dispersant is present at 1.2 wt % to 5 wt %, or 1.8 wt % to 4.5 wt % of the lubricating composition.

The succinimide dispersant may comprises a polyisobutylene succinimide, wherein the polyisobutylene from which polyisobutylene succinimide is derived has a number average molecular weight of 350 to 5000, or 750 to 2500.

In one embodiment the friction modifier may be chosen from long chain fatty acid derivatives of amines, long chain fatty esters, or derivatives of long chain fatty epoxides; fatty imidazolines; amine salts of alkylphosphoric acids; fatty alkyl tartrates; fatty alkyl tartrimides; fatty alkyl tartramides; fatty glycolates; and fatty glycolamides. The friction modifier may be present at 0 wt % to 6 wt %, or 0.01 wt % to 4 wt %, or 0.05 wt % to 2 wt %, or 0.1 wt % to 2 wt % of the lubricating composition.

As used herein the term "fatty alkyl" or "fatty" in relation to friction modifiers means a carbon chain having 10 to 22 carbon atoms, typically a straight carbon chain.

Examples of suitable friction modifiers include long chain fatty acid derivatives of amines, fatty esters, or fatty epoxides; fatty imidazolines such as condensation products of carboxylic acids and polyalkylene-polyamines; amine salts of alkylphosphoric acids; fatty alkyl tartrates; fatty alkyl tartrimides; fatty alkyl tartramides; fatty phosphonates; fatty phosphites; borated phospholipids, borated fatty epoxides; glycerol esters; borated glycerol esters; fatty amines; alkoxylated fatty amines; borated alkoxylated fatty amines; hydroxyl and polyhydroxy fatty amines including tertiary hydroxy fatty amines; hydroxy alkyl amides; metal salts of fatty acids; metal salts of alkyl salicylates; fatty oxazolines; fatty ethoxylated alcohols; condensation products of carboxylic acids and polyalkylene polyamines; or reaction products from fatty carboxylic acids with guanidine, aminoguanidine, urea, or thiourea and salts thereof.

Friction modifiers may also encompass materials such as sulfurised fatty compounds and olefins, molybdenum dialkyldithiophosphates, molybdenum dithiocarbamates, sunflower oil or soybean oil monoester of a polyol and an aliphatic carboxylic acid.

In another embodiment the friction modifier may be a long chain fatty acid ester. In another embodiment the long chain fatty acid ester may be a mono-ester and in another embodiment the long chain fatty acid ester may be a triglyceride.

The lubricating composition optionally further includes at least one antiwear agent. Examples of suitable antiwear agents include titanium compounds, tartrates, tartrimides, oil soluble amine salts of phosphorus compounds, sulfurised olefins, metal dihydrocarbyldithiophosphates (such as zinc dialkyldithiophosphates), phosphites (such as dibutyl phosphite), phosphonates, thiocarbamate-containing compounds, such as thiocarbamate esters, thiocarbamate amides, thiocarbamic ethers, alkylene-coupled thiocarbamates, and bis(S-alkyldithiocarbamyl) disulphides. The antiwear agent may in one embodiment include a tartrate, or tartrimide as disclosed in International Publication WO 2006/044411 or Canadian Patent CA 1 183 125. The tartrate or tartrimide may contain alkyl-ester groups, where the sum of carbon atoms on the alkyl groups is at least 8. The antiwear agent may in one embodiment include a citrate as is disclosed in US Patent Application 20050198894.

Another class of additives includes oil-soluble titanium compounds as disclosed in US 7,727,943 and US2006/0014651. The oil-soluble titanium compounds may function as antiwear agents, friction modifiers, antioxidants, deposit control additives, or more than one of these functions. In one embodiment the oil soluble titanium compound is a titanium (IV) alkoxide. The titanium alkoxide is formed from a monohydric alcohol, a polyol or mixtures thereof. The monohydric alkoxides may have 2 to 16, or 3 to 10 carbon atoms. In one embodiment, the titanium alkoxide is titanium (IV) isopropoxide. In one embodiment, the titanium alkoxide is titanium (IV) 2-ethylhexoxide. In one embodiment, the titanium compound comprises the alkoxide of a vicinal 1,2-diol or polyol. In one embodiment, the 1,2-vicinal diol comprises a fatty acid mono-ester of glycerol, often the fatty acid is oleic acid.

In one embodiment, the oil soluble titanium compound is a titanium carboxylate. In a further embodiment the titanium (IV) carboxylate is titanium neodecanoate.

The lubricating composition may in one embodiment further include a phosphorus-containing antiwear agent. Typically the phosphorus-containing antiwear agent may be a zinc dialkyldithiophosphate, phosphite, phosphate, phosphonate, and ammonium phosphate salts, or mixtures thereof. Zinc dialkyldithiophosphates are known in the art. The antiwear agent may be present at 0 wt % to 3 wt %, or 0.1 wt % to 1.5 wt %, or 0.5 wt % to 0.9 wt % of the lubricating composition.

Extreme Pressure (EP) agents that are soluble in the oil include sulfur- and chlorosulfur-containing EP agents, dimercaptothiadiazole or CS₂ derivatives of dispersants (typically succinimide dispersants), derivative of chlorinated hydrocarbon EP agents and phosphorus EP agents. Examples of such EP agents include chlorinated wax; sulfurised olefins (such as sulfurised isobutylene), a hydrocarbyl-substituted 2,5-dimercapto-1,3,4-thiadiazole, or oligomers thereof, organic sulphides and polysulphides such as dibenzyldisulphide, bis-(chlorobenzyl) disulphide, dibutyl tetrasulphide, sulfurised methyl ester of oleic acid, sulfurised alkylphenol, sulfurised dipentene, sulfurised terpene, and sulfurised Diels-Alder adducts; phosphosulfurised hydrocarbons such as the reaction product of phosphorus sulphide with turpentine or methyl oleate; phosphorus esters such as the dihydrocarbon and trihydrocarbon phosphites, e.g., dibutyl phosphite, diheptyl phosphite, dicyclohexyl phosphite, pentylphenyl phosphite; dipentylphenyl phosphite, tridecyl phosphite, distearyl phosphite and polypropylene substituted phenol phosphite; metal thiocarbamates such as zinc dioctyldithiocarbamate and barium heptylphenol diacid; amine salts of alkyl and dialkylphosphoric acids or derivatives including, for example, the amine salt of a reaction product of a dialkyl-dithiophosphoric acid with propylene oxide and subsequently followed by a further reaction with P₂O₅; and mixtures thereof (as described in US 3,197,405).

Foam inhibitors that may be useful in the compositions of the invention include polysiloxanes, copolymers of ethyl acrylate and 2-ethylhexylacrylate and optionally vinyl acetate; demulsifiers including fluorinated polysiloxanes, trialkyl phosphates, polyethylene glycols, polyethylene oxides, polypropylene oxides and (ethylene oxide-propylene oxide) polymers.

Other viscosity modifiers may include a polymethacrylate, an ethylene-alpha olefin copolymer, a hydrogenated star polymer comprising conjugated diene monomers such as butadiene or isoprene, or mixtures thereof.

Pour point depressants that may be useful in the compositions of the invention include polyalphaolefins, esters of maleic anhydride-styrene copolymers, fumarate ester-vinyl acetate copolymers, poly(meth)acrylates, polyacrylates or polyacrylamides.

Demulsifiers include trialkyl phosphates, and various polymers and copolymers of ethylene glycol, ethylene oxide, propylene oxide, or mixtures thereof.

Metal deactivators include derivatives of benzotriazoles (typically tolyltriazole), 1,2,4-triazoles, benzimidazoles, 2-alkyldithiobenzimidazoles or 2-alkyldithiobenzothiazoles. The metal deactivators may also be described as corrosion inhibitors.

Seal swell agents include sulfolene derivatives Exxon Necton-37™ (FN 1380) and Exxon Mineral Seal Oil™ (FN 3200).

### Industrial Application

In one embodiment the oil mist separator may be driven by an oil turbine. This, in turn, is driven by pressurized lubricant oil normally available in diesel engines. This turbine, fitted in the bottom housing of the unit, spins the centrifugal rotor. There is a separator drain that feeds the oil back to the sump. The centrifugal rotor may carry a number of conical discs, stacked on top of each other, and it is here that the separation of oil mist from the blow-by gases takes place, and where soot may accumulate during engine operation. As the disc stack rotates, the dirty crankcase gas is subject to centrifugal acceleration that amounts to 25 000 m/s² (82 000 ft/s²).

Without being bound by theory, these centrifugal forces, are believed to correspond to 2 500 times the effect of the earth's gravity, make the oil droplets separate out from the gas. The oil is then thrown off the edges of the discs and onto the inside wall of the oil mist separator housing, from where it runs via the drain outlet back to the sump. The clean gas, on the other hand, passes to the outlet of the unit and then on into the inlet manifold of the engine. In addition to being a separator unit, the disc stack works as a fan, extracting the blow-by gas from the crankcase and avoiding pressure drop across the unit. An internal pressure control valve ensures that the crankcase pressure is always kept within a suitable working range, despite any pressure variations in the inlet manifold. An oil mist separator of this type is known in the art and is sold commercially under the Alfdex® trademark.

The internal combustion engine may be a 4-stroke engine. The internal combustion engine may or may not have an Exhaust Gas Recirculation system. The internal combustion engine may be fitted with an emission control system or a turbocharger. Examples of the emission control system include diesel particulate filters (DPF), or systems employing selective catalytic reduction (SCR).

The lubricating composition may have a total sulfated ash content of 1.2 wt % or less.

The sulfur content of the lubricating composition may be 1 wt % or less, or 0.8 wt % or less, or 0.5 wt % or less, or 0.3 wt % or less. In one embodiment the sulfur content may be in the range of 0.001 wt % to 0.5 wt %, or 0.01 wt % to 0.3 wt %. The phosphorus content may be 0.2 wt % or less, or 0.12 wt % or less, or 0.1 wt % or less, or 0.085 wt % or less, or 0.08 wt % or less, or even 0.06 wt % or less, 0.055 wt % or less, or 0.05 wt % or less. In one embodiment the phosphorus content may be 0.04 wt % to 0.12 wt %. In one embodiment the phosphorus content may be 100 ppm to 1000 ppm, or 200 ppm to 600 ppm. The total sulfated ash content may be 0.3 wt % to 1.2 wt %, or 0.5 wt % to 1.1 wt % of the lubricating composition. In one embodiment the sulfated ash content may be 0.5 wt % to 1.1 wt % of the lubricating composition.

In one embodiment the lubricating composition may be characterized as having (i) a sulfur content of 0.5 wt % or less, (ii) a phosphorus content of 0.15 wt % or less, and (iii) a sulfated ash content of 0.5 wt % to 1.5 wt % or less.

The lubricating composition may be characterized as having at least one of (i) a sulfur content of 0.2 wt % to 0.4 wt % or less, (ii) a phosphorus content of 0.08 wt % to 0.15 wt %, and (iii) a sulfated ash content of 0.5 wt % to 1.5 wt % or less.

The lubricating composition may be characterized as having a sulfated ash content of 0.5 wt % to 1.2 wt %.

As used herein TBN values are (total base number) measured by the methodology described in D4739 (buffer).

The lubricating composition may be characterized as having a total base number (TBN) content of at least 5 mg KOH/g.

The lubricating composition may be characterized as having a total base number (TBN) content of 6 to 13 mg KOH/g, or 7 to 12 mg KOH/g.

The lubricating composition may have a SAE viscosity grade of XW-Y, wherein X may be 0, 5, 10, or 15; and Y may be 16, 20, 30, or 40.

The internal combustion engine disclosed herein may have a steel surface on a cylinder bore, cylinder block, or piston ring.

The internal combustion engine may have a surface of steel, or an aluminum alloy, or an aluminum composite.

Typically the vehicle powered by the compression-ignition internal combustion engine of the present invention has a maximum laden mass over 3,500 kg.

The following examples provide illustrations of the invention. These examples are non-exhaustive and are not intended to limit the scope of the invention.

### EXAMPLES

A series of 15W-40 diesel lubricating compositions are prepared according to Table 1 below. The compositions comprise a cross-section of soot-dispersing molecules to evaluate the tendency to plug the centrifugal oil mist separator.

**Table 1 - Diesel Lubricant Compositions¹**

| | EX1 | EX2 | EX3 | EX4 | CEX5⁷ |
|---|---|---|---|---|---|
| Group II Base Oil | Balance to 100% | | | | |
| Low Mn D-OCP² | 1.00 | 0.13 | 0 | 0.67 | 0 |
| High Mn D-OCP³ | 0 | 0 | 0 | 0 | 0.85 |
| Styrene Butadiene^{4a} | 0 | 0 | 0.8 | 0 | 0 |
| Styrene Isoprene^{4b} | 0 | 0 | 0 | 0.57 | 0 |
| Succinimide dispersant⁵ | 4.28 | 4.10 | 6.7 | 4.1 | 4.4⁸ |
| Overbased Ca sulfonate | 0.90 | 0.90 | 0 | 0.90 | 0.7⁹ |
| Overbased Mg sulfonate | 0 | 0 | 0 | 0 | 0.3⁹ |
| Overbased Ca sulfur-coupled phenate | 0.81 | 0.81 | 0.9 | 0.81 | N/A |
| Ca sulfur-free phenate | 0 | 0 | 0.9 | 0 | 0 |
| Mg sulfur-free phenate | 0 | 0 | 0.66 | 0 | 0 |
| Ashless Antioxidants⁶ | 1.83 | 1.23 | 2.7 | 1.23 | 1.5 |
| Secondary ZDDP (C3-6) | 1.0 | 1.0 | 0.78 | 1.0 | 1.0 |
| Other Additives¹⁰ | 0.11 | 0.11 | 1.0 | 0.13 | |
| OCP VI Improver | 0.50 | 0.70 | 0 | 0 | 0 |
| | | | | | |
| %Calcium (ppm) | 2600 | 2300 | 2180 | 2327 | 1500 |
| %Magnesium (ppm) | 30 | 0 | 210 | 0 | 400 |
| %Phosphorus (ppm) | 1200 | 1100 | 750 | 1070 | 1150 |
| %Molybdenum (ppm) | 0 | 0 | 0 | 0 | 90 |
| %Boron (ppm) | 50 | 0 | 135 | 0 | 535 |

| | | | | | |
|---|---|---|---|---|---|
| *1. All amounts shown above are in weight percent and are on an oil-free basis unless otherwise noted and include low levels of other additives including corrosion inhibitors*, *pour point depressants, ashless TBN boosters, and foam inhibitors* *2. OCP (8000 Mn) based DVM booster aminated with aromatic amine (Available as Lubrizol*® *6586H)* *3. OCP (64k Mn) based DVM aminated with 4-amino-diphenylamine (available as Afton HiTec*® *5777)* *4a. Hydrogenated styrene-butadiene block copolymer with 30% Styrene and Mn of 90k (available diluted in oil as Lubrizol*® *7418A)* *4b. Hydrogenated styrene-isoprene block polymer with 30% styrene and polymer Mn of 82k (available as Lubrizol*® *7308)* *5. Boron containing and*/*or boron-free succinimide dispersants* *6. Combination of alkylated diphenylamine, hindered phenol, and sulfurized olefin* *7. Commercial CJ-4 lubricant available as Chevron DELO 400LE* *8. PIBsuccinimide dispersant with a mixture of aromatic amine and polyetheramine head-groups* *9. Estimated* *10. Other additives include corrosion inhibitors, ashless TBN boosters, and friction modifiers* | | | | | |

The lubricating compositions are evaluated for oil mist separator fouling and soot handling. Oil mist separator compatibility was evaluated in diesel trucks equipped with 2010EC DD15 engines manufactured by Detroit Diesel Corporation (DDC). The engines were equipped with Alfdex® centrifugal oil mist separators. The oils were evaluated in field trials ranging from 250,000 miles to nearly 600,000 miles. All of the oil mist separator (OMS) units were inspected after the field trials were completed and rated for sludge deposit formation and drain hole plugging.

The results obtained indicate that the lubricating composition disclosed herein reduces filter plugging in the oil mist separator and reduced deposits. This is accomplished while maintaining superior soot handling.

It is known that some of the materials described above may interact in the final formulation, so that the components of the final formulation may be different from those that are initially added. The products formed thereby, including the products formed upon employing lubricant composition of the present invention in its intended use, may not be susceptible of easy description. Nevertheless, all such modifications and reaction products are included within the scope of the present invention; the present invention encompasses lubricant composition prepared by admixing the components described above.

Unless otherwise indicated, each chemical or composition referred to herein should be interpreted as being a commercial grade material which may contain the isomers, by-products, derivatives, and other such materials which are normally understood to be present in the commercial grade. However, the amount of each chemical component is presented exclusive of any solvent or diluent oil, which may be customarily present in the commercial material, unless otherwise indicated. It is to be understood that the upper and lower amount, range, and ratio limits set forth herein may be independently combined. Similarly, the ranges and amounts for each element of the invention may be used together with ranges or amounts for any of the other elements.

As used herein, the term "hydrocarbyl substituent" or "hydrocarbyl group" is used in its ordinary sense, which is well-known to those skilled in the art. Specifically, it refers to a group having a carbon atom directly attached to the remainder of the molecule and having predominantly hydrocarbon character. Examples of hydrocarbyl groups include: hydrocarbon substituents, including aliphatic, alicyclic, and aromatic substituents; substituted hydrocarbon substituents, that is, substituents containing non-hydrocarbon groups which, in the context of this invention, do not alter the predominantly hydrocarbon nature of the substituent; and hetero substituents, that is, substituents which similarly have a predominantly hydrocarbon character but contain other than carbon in a ring or chain. A more detailed definition of the term "hydrocarbyl substituent" or "hydrocarbyl group" is described in paragraphs [0118] to [0119] of International Publication WO2008147704, or a similar definition in paragraphs [0137] to [0141] of published application US 2010-0197536.

## Claims

1. A method of lubricating an internal combustion engine equipped with a centrifugal oil mist separator, wherein the lubricant contains 0.1 wt % to 8 wt % soot resulting from operation of the engine, and wherein the lubricant composition comprises an oil of lubricating viscosity, and 0.2 wt % to 3 wt % of a soot dispersing additive having a shear stability index of 0 to 25 as measured in the Orbahn shear test according to ASTM D6278, wherein the soot dispersing additive is a block copolymer comprising (i) a vinyl aromatic monomer block and (ii), a conjugated diene olefin monomer block.

2. The method of claim 1, wherein the lubricating composition is characterized as having (i) a sulfur content of 0.5 wt % or less, (ii) a phosphorus content of 0.15 wt % or less, and (iii) a sulfated ash content of 0.5 wt % to 1.5 wt % or less.

3. The method of any preceding claim, wherein the lubricating composition is characterized as having at least one of (i) a sulfur content of 0.2 wt % to 0.4 wt % or less, (ii) a phosphorus content of 0.08 wt % to 0.15 wt %, and (iii) a sulfated ash content of 0.5 wt % to 1.5 wt % or less.

4. The method of any preceding claim, wherein the lubricating composition is characterized as having a sulfated ash content of 0.5 wt % to 1.2 wt %.

5. The method of any preceding claim, wherein the lubricating composition is characterized as having a total base number (TBN) content of at least 5 mg KOH/g, or 6 to 13 mg KOH/g, or 7 to 12 mg KOH/g, as measured according to ASTM D4739.

6. The method of any preceding claim, wherein the vehicle powered by a compression-ignition internal combustion engine has a maximum laden mass over 3,500 kg.

7. The method of any preceding claim, wherein the soot dispersing additive a shear stability index of 0 to 25, or 0 to 20, or 2 to 20, or 5 to 15 as measured by the Orbahn shear test (ASTM D6278).

8. The method of any preceding claim, wherein the soot dispersing additive is present at 0.2 wt % to 3 wt %, or 0.2 wt % to 2.5 wt %, or 0.3 wt % to 1.4 wt % of the lubricating composition.

9. The method of any preceding claim, wherein the block copolymer comprises a hydrogenated styrene-butadiene copolymer, or wherein the block copolymer comprises a hydrogenated styrene-isoprene copolymer.

10. The method of any preceding claim 1 to 9, wherein the soot dispersing additive is prepared by a process comprising:
1) reacting an alpha-beta unsaturated carboxylic acid or active derivative thereof with a selectively hydrogenated star-shaped polymer comprising a polyvinylaromatic nucleus and at least 4 polymeric arms linked to said nucleus wherein said polymeric arms are chosen from:
(i) hydrogenated homopolymers and hydrogenated copolymers of conjugated dienes;
(ii) hydrogenated copolymers of conjugated dienes and monoalkenyl arenes (typically a vinyl aromatic monomer such as styrene); and
(iii) mixtures thereof;
and wherein at least 80% of the aliphatic unsaturation of the star-shaped polymer has been reduced by hydrogenation while less than 20% of the aromatic unsaturation has been reduced; and
2) reacting the activated star polymer thus formed with:
(a) at least one compound of general formula RO(AO)ₙH,
wherein R is a C₄₋₂₀ alkyl group, any A moiety is independently an ethylene or propylene moiety, and n is 0 to 5, optionally followed by reaction with (b) a long chain alkane-substituted carboxylic acid or active derivative thereof, and/or (c) a C₁ to C₈ amine containing 1 to 8 nitrogen atoms and/or an alkane polyol having at least two hydroxy groups; or with (d) the pre-formed product of reactants (b) and (c), optionally followed by esterifying any residual acid groups with a C₁₋₆ alkanol.

11. The method of any preceding claim, wherein the lubricant contains less than 0.1 wt % of olefin copolymer soot dispersing additives.

12. The method of any preceding claim, wherein the lubricating composition further comprises a phenolic or an aminic antioxidant or mixtures thereof, and wherein the antioxidant is present at 0.1 wt % to 3 wt %, or 0.5 wt % to 2.75 wt %, or 1 wt % to 2.5 wt %.

13. The method of any preceding claim, wherein the lubricating composition further comprises an overbased sulfonate detergent present at 0.01 wt % to 0.9 wt %, or 0.05 wt % to 0.8 wt %, or 0.1 wt % to 0.7 wt %, or 0.2 wt % to 0.6 wt %.

14. The method of any preceding claim, wherein the lubricant composition further comprises an ashless dispersant comprising a succinimide dispersant different from the soot-dispersing additive of the invention, wherein the succinimide dispersant has a TBN of at least 40 mg KOH/g, as measured according to ASTM D4739, and is present at 1.2 wt % to 5 wt %, or 1.8 wt % to 4.5 wt % of the lubricating composition.

15. The method of any preceding claim, wherein the oil mist separator is a centrifugal oil mist separator, preferably wherein the centrifugal oil mist separator rotates at 2500 to 10000, or 4000 to 8000, or 5000 to 7000 rpm.

## Patentansprüche

1. Verfahren zum Schmieren eines Verbrennungsmotors, der mit einem Zentrifugalöl-Nebelabscheider ausgestattet ist, wobei das Schmiermittel 0,1 Gew.-% bis 8 Gew.-% Ruß enthält, der aus dem Betrieb des Motors resultiert, und wobei die Schmiermittelzusammensetzung ein Öl mit einer Schmierviskosität und 0,2 Gew.-% bis 3 Gew.-% eines Rußdispersionsadditivs umfasst, das einen Scherstabilitätsindex von 0 bis 25 aufweist, gemessen im Orbahn-Schertest gemäß ASTM D6278, wobei das Rußdispersionsadditiv ein Blockcopolymer ist, umfassend (i) einen vinylaromatischen Monomerblock und (ii) einen konjugierten Dienolefinmonomerblock.

2. Verfahren nach Anspruch 1, wobei die Schmiermittelzusammensetzung **dadurch gekennzeichnet ist, dass** sie (i) einen Schwefelgehalt von 0,5 Gew.-% oder weniger, (ii) einen Phosphorgehalt von 0,15 Gew.-% oder weniger und (iii) einen Sulfataschegehalt von 0,5 Gew.-% bis 1,5 Gew.-% oder weniger aufweist.

3. Verfahren nach einem der vorhergehenden Ansprüche, wobei die Schmierzusammensetzung **dadurch gekennzeichnet ist, dass** sie mindestens eines von (i) einem Schwefelgehalt von 0,2 Gew.-% bis 0,4 Gew.-% oder weniger, (ii) einem Phosphorgehalt von 0,08 Gew.-% bis 0,15 Gew.-% und (iii) einem Sulfataschegehalt von 0,5 Gew.-% bis 1,5 Gew.-% oder weniger aufweist.

4. Verfahren nach einem der vorhergehenden Ansprüche, wobei die Schmiermittelzusammensetzung **dadurch gekennzeichnet ist, dass** sie einen Sulfataschegehalt von 0,5 Gew.-% bis 1,2 Gew.-% aufweist.

5. Verfahren nach einem der vorhergehenden Ansprüche, wobei die Schmiermittelzusammensetzung **dadurch gekennzeichnet ist, dass** sie einen Gesamtbasenzahl (TBN)-Gehalt von mindestens 5 mg KOH/g oder 6 bis 13 mg KOH/g oder 7 bis 12 mg KOH/g, gemessen gemäß ASTM D4739, aufweist.

6. Verfahren nach einem der vorhergehenden Ansprüche, wobei das Fahrzeug, das von einem kompressionsgezündeten Verbrennungsmotor angetrieben wird, eine Gesamtmasse in beladenem Zustand von mehr als 3.500 kg aufweist.

7. Verfahren nach einem der vorhergehenden Ansprüche, wobei das Rußdispersionsadditiv einen Scherstabilitätsindex von 0 bis 25 oder 0 bis 20 oder 2 bis 20 oder 5 bis 15, gemessen gemäß Orbahn-Schertest (ASTM D6278), aufweist.

8. Verfahren nach einem der vorhergehenden Ansprüche, wobei das Rußdispersionsadditiv in einer Menge von 0,2 Gew.-% bis 3 Gew.-% oder 0,2 Gew.-% bis 2,5 Gew.-% oder 0,3 Gew.-% bis 1,4 Gew.-% der Schmiermittelzusammensetzung vorhanden ist.

9. Verfahren nach einem der vorhergehenden Ansprüche, wobei das Blockcopolymer ein hydriertes StyrolButadien-Copolymer umfasst oder wobei das Blockcopolymer ein hydriertes Styrol-Isopren-Copolymer umfasst.

10. Verfahren nach einem der vorhergehenden Ansprüche 1 bis 9, wobei das Rußdispersionsadditiv durch einen Prozess hergestellt wird, der umfasst:
1) Umsetzen einer alpha-beta-ungesättigten Carbonsäure oder eines aktiven Derivats davon mit einem selektiv hydrierten sternförmigen Polymer, umfassend einen polyvinylaromatischen Kern und mindestens 4 polymere Arme, die mit dem Kern verknüpft sind, wobei die polymeren Arme ausgewählt sind aus:
(i) hydrierten Homopolymeren und hydrierten Copolymeren aus konjugierten Dienen;
(ii) hydrierten Copolymeren aus konjugierten Dienen und Monoalkenylarenen (typischerweise einem vinylaromatischen Monomer wie Styrol); und
(iii) Mischungen davon;
und wobei mindestens 80 % der aliphatischen Ungesättigtheit des sternförmigen Polymers durch Hydrierung reduziert wurde, während weniger als 20 % der aromatischen Ungesättigtheit reduziert wurde; und
2) Umsetzen des so gebildeten aktivierten Sternpolymers mit:
(a) mindestens einer Verbindung der allgemeinen Formel RO(AO)ₙH,
worin R eine C₄₋₂₀-Alkylgruppe ist, jede A-Einheit unabhängig eine Ethylen- oder Propyleneinheit ist und n 0 bis 5 ist, wahlweise gefolgt von einer Umsetzung mit (b) einer langkettigen alkansubstituierten Carbonsäure oder einem aktiven Derivat davon; und/oder (c) einem C₁ bis C₈-Amin mit 1 bis 8 Stickstoffatomen und/oder einem Alkanpolyol mit mindestens zwei Hydroxygruppen; oder mit (d) dem vorgeformten Produkt der Reaktanten (b) und (c), wahlweise gefolgt durch das Verestern jeder Restsäuregruppe mit einem C₁₋₆-Alkanol.

11. Verfahren nach einem der vorhergehenden Ansprüche, wobei das Schmiermittel weniger als 0,1 Gew.-% Olefincopolymer-Rußdispersionsadditive enthält.

12. Verfahren nach einem der vorhergehenden Ansprüche, wobei die Schmiermittelzusammensetzung weiter ein phenolisches oder aminisches Antioxidationsmittel oder Mischungen davon umfasst, und wobei das Antioxidationsmittel in einer Menge von 0,1 Gew.-% bis 3 Gew.-% oder 0,5 Gew.-% bis 2,75 Gew.-% oder 1 Gew.-% bis 2,5 Gew.-% vorhanden ist.

13. Verfahren nach einem der vorhergehenden Ansprüche, wobei die Schmiermittelzusammensetzung ferner ein überbasisches Sulfonatdetergens von 0,01 Gew.-% bis 0,9 Gew.-% oder 0,05 Gew.-% bis 0,8 Gew.-% oder 0,1 Gew.-% bis 0,7 Gew.-% oder 0,2 Gew.-% bis 0,6 Gew.-% umfasst.

14. Verfahren nach einem der vorhergehenden Ansprüche, wobei die Schmiermittelzusammensetzung ferner ein aschefreies Dispergiermittel umfasst, das ein Succinimiddispergiermittel umfasst, das anders als das Rußdispersionsadditiv der Erfindung ist, wobei das Succinimiddispergiermittel eine TBN von mindestens 40 mg KOH/g, gemessen gemäß ASTM D4739 aufweist, und in 1,2 Gew.-% bis 5 Gew.-% oder 1,8 Gew.-% bis 4,5 Gew.-% der Schmiermittelzusammensetzung vorhanden ist.

15. Verfahren nach einem der vorhergehenden Ansprüche, wobei der Ölnebelabscheider ein Zentrifugalöl-Nebelabscheider ist, wobei vorzugsweise der Zentrifugalöl-Nebelabscheider bei 2500 bis 10000 oder 4000 bis 8000 oder 5000 bis 7000 U/min rotiert.

## Revendications

1. Procédé de lubrification d'un moteur à combustion interne pourvu d'un séparateur de brouillard d'huile centrifuge, dans lequel le lubrifiant contient 0,1 % en poids à 8 % en poids de suie résultant du fonctionnement du moteur et dans lequel la composition de lubrifiant comprend une huile de viscosité lubrifiante et 0,2 % en poids à 3 % en poids d'un additif de dispersion de suie ayant un indice de stabilité au cisaillement tel que mesuré dans l'essai de cisaillement d'Orbahn selon la norme ASTM D6278 de 0 à 25, l'additif de dispersion de suie étant un copolymère séquencé comprenant (i) une séquence à base de monomère vinylique aromatique et (ii) une séquence à base de monomère oléfinique diénique conjugué.

2. Procédé selon la revendication 1, dans lequel la composition lubrifiante est **caractérisée en ce qu'**elle a (i) une teneur en soufre inférieure ou égale à 0,5 % en poids, (ii) une teneur en phosphore inférieure ou égale à 0,15 % en poids et (iii) une teneur en cendres sulfatées de 0,5 % en poids à 1,5 % en poids ou moins.

3. Procédé selon une quelconque revendication précédente, dans lequel la composition lubrifiante est **caractérisée en ce qu'**elle a au moins l'une de (i) une teneur en soufre de 0,2 % en poids à 0,4 % en poids ou moins, (ii) une teneur en phosphore de 0,08 % en poids à 0,15 % en poids et (iii) une teneur en cendres sulfatées de 0,5 % en poids à 1,5 % en poids ou moins.

4. Procédé selon une quelconque revendication précédente, dans lequel la composition lubrifiante est **caractérisée en ce qu'**elle a une teneur en cendres sulfatées de 0,5 % en poids à 1,2 % en poids.

5. Procédé selon une quelconque revendication précédente, dans lequel la composition lubrifiante est **caractérisée en ce qu'**elle a une teneur d'indice de base total (TBN), telle que mesurée selon la norme ASTM D4739, d'au moins 5 mg de KOH/g ou de 6 à 13 mg de KOH/g ou de 7 à 12 mg de KOH/g.

6. Procédé selon une quelconque revendication précédente, dans lequel le véhicule équipé d'un moteur à combustion interne à allumage par compression a un poids en charge maximal de plus de 3 500 kg.

7. Procédé selon une quelconque revendication précédente, dans lequel l'additif de dispersion de suie a un indice de stabilité au cisaillement tel que mesuré par l'essai de cisaillement d'Orbahn (norme ASTM D6278) de 0 à 25, ou de 0 à 20, ou de 2 à 20, ou de 5 à 15.

8. Procédé selon une quelconque revendication précédente, dans lequel l'additif de dispersion de suie est présent à hauteur de 0,2 % en poids à 3 % en poids, ou de 0,2 % en poids à 2,5 % en poids, ou de 0,3 % en poids à 1,4 % en poids de la composition lubrifiante.

9. Procédé selon une quelconque revendication précédente, dans lequel le copolymère séquencé comprend un copolymère de styrène-butadiène hydrogéné ou dans lequel le copolymère séquencé comprend un copolymère de styrène-isoprène hydrogéné.

10. Procédé selon une quelconque revendication 1 à 9 précédente, dans lequel l'additif de dispersion de suie est préparé par un procédé comprenant :
1) la réaction d'un acide carboxylique à insaturation alpha-bêta ou d'un dérivé actif de celui-ci avec un polymère étoilé sélectivement hydrogéné comprenant un noyau polyvinylique aromatique et au moins quatre bras polymères reliés audit noyau, lesdits bras polymères étant choisis parmi :
(i) les homopolymères hydrogénés et copolymères hydrogénés de diènes conjugués ;
(ii) les copolymères hydrogénés de diènes conjugués et de monoalcénylarènes (généralement un monomère vinylique aromatique tel que le styrène) ; et
(iii) les mélanges de ceux-ci ;
et au moins 80 % de l'insaturation aliphatique du polymère étoilé ayant été réduite par hydrogénation alors que moins de 20 % de l'insaturation aromatique a été réduite ; et
2) la réaction du polymère en étoile activé ainsi formé avec :
(a) au moins un composé de formule générale RO(AO)ₙH,
R étant un groupe alkyle en C₄-C₂₀,
une quelconque fraction A étant indépendamment une fraction éthylène ou propylène et
n valant 0 à 5,
éventuellement suivie de la réaction avec
(b) un acide carboxylique substitué par un alcane à longue chaîne ou un dérivé actif de celui-ci
et/ou
(c) une amine en C₁ à C₈ contenant 1 à 8 atomes d'azote et/ou un polyol d'alcane ayant au moins deux groupes hydroxy ;
ou avec
(d) le produit préalablement formé de réactifs (b) et (c),
éventuellement suivie de l'estérification de quelconques groupes acides résiduels avec un alcanol en C₁₋₆.

11. Procédé selon une quelconque revendication précédente, dans lequel le lubrifiant contient moins de 0,1 % en poids d'additifs de dispersion de suie copolymères d'oléfines.

12. Procédé selon une quelconque revendication précédente, dans lequel la composition lubrifiante comprend en outre un antioxydant phénolique ou aminofonctionnel ou des mélanges de plusieurs de tels oxydants et dans lequel l'antioxydant est présent à hauteur de 0,1 % en poids à 3 % en poids, ou de 0,5 % en poids à 2,75 % en poids, ou de 1 % en poids à 2,5 % en poids.

13. Procédé selon une quelconque revendication précédente, dans lequel la composition lubrifiante comprend en outre un détergent sulfonate surbasique présent à hauteur de 0,01 % en poids à 0,9 % en poids, ou de 0,05 % en poids à 0,8 % en poids, ou de 0,1 % en poids à 0,7 % en poids, ou de 0,2 % en poids à 0,6 % en poids.

14. Procédé selon une quelconque revendication précédente, dans lequel la composition lubrifiante comprend en outre un dispersant sans cendres comprenant un dispersant succinimide différent de l'additif de dispersion de suie de l'invention, le dispersant succinimide ayant un TBN, tel que mesuré selon la norme ASTM D4739, d'au moins 40 mg de KOH/g et étant présent à hauteur de 1,2 % en poids à 5 % en poids, ou de 1,8 % en poids à 4,5 % en poids de la composition lubrifiante.

15. Procédé selon une quelconque revendication précédente, dans lequel le séparateur de brouillard d'huile est un séparateur de brouillard d'huile centrifuge, de préférence le séparateur de brouillard d'huile centrifuge tournant à 2500 à 10000, ou 4000 à 8000, ou 5000 à 7000 tr/min.
